# EUROPÄISCHE PATENTANMELDUNG

(11) **EP 3 358 224 A1**
(43) Veröffentlichungstag der Anmeldung: **08.08.2018**
(21) Anmeldenummer: 17154166.7
(22) Anmeldetag: 01.02.2017
(51) Int. Cl.: F16H 57/031, F16H 57/04

(54) **KOMPAKTE GETRIEBEMOTORANORDNUNG**

(71) Anmelder: Getriebebau NORD GmbH & Co. KG, 22941 Bargteheide (DE)
(72) Erfinder: Bouché, Bernhard, 22941 Bargteheide (DE); Herbst, Andrezej, 22941 Bargteheide (DE)
(74) Vertreter: Glawe, Delfs, Moll

(57) **Zusammenfassung**

Anordnung aus einem Getriebe (2) und einem Antriebsmotor (5) mit einem Gehäuse (3), das eine Getriebekammer (30) umgibt. In der Getriebekammer (30) ist mindestens eine Getriebestufe (4) angeordnet. In der Getriebekammer (30) sind eine Antriebswelle (46) mit einem Antriebsritzel (45) und ferner eine Abtriebswelle (42) mit einem Abtriebszahnrad (41) angeordnet, wobei das Antriebsritzel (45) das Abtriebszahnrad (41) antreibt. Erfindungsgemäß sind die Getriebestufe (4) und der Antriebsmotor (5) gemeinsam in derselben Getriebekammer (30) angeordnet, wobei der Antriebsmotor (5) gemeinsam mit der Getriebestufe (4) gekühlt ist. Durch die Anordnung in derselben Kammer (30) ist der Antriebsmotor (5) thermisch optimal angebunden. Es ergibt sich eine gute Kühlwirkung, ohne auf äußere Luftkühlung angewiesen zu sein. Zudem entfällt ein Durchbruch für die Motorwelle mitsamt dem verschleißträchtigen Dichtring dafür. Damit werden Robustheit und Langlebigkeit erhöht. Ferner verringern sich Geräuschemissionen, da die Getriebekammer wie eine Kapselung des Antriebsmotors wirkt.

## Beschreibung

Die Erfindung betrifft eine kompakte Getriebemotoranordnung. Genauer gesagt betrifft sie eine Anordnung aus einem (Baukasten-)Getriebe und einem Antriebsmotor mit einem Gehäuse, das eine Getriebekammer mit einer Getriebestufe umgibt.

Antriebsanordnungen, bestehend aus einem Getriebe sowie einem Antriebsmotor, werden vielfältig im industriellen Bereich zu unterschiedlichen Zwecken eingesetzt. Insbesondere werden sie verwendet für Kleinantriebe von Förderanlagen (beispielsweise Förderbänder oder Fördersysteme von Hochregallagern) sowie Stellantrieben von Maschinen. Häufig sind mehrere dieser Antriebe an einer Anlage vorgesehen. Die dazu erforderlichen Getriebe sind meist als Baukastengetriebe ausgeführt und in vielen Ausführungen bzw. Varianten erhältlich, beispielsweise mit verschiedenen Übersetzungen, Baugrößen, Befestigungsanordnungen etc.

Zur Anpassung an die unterschiedlichen Anforderungen ist zum einen Modularität wichtig. Dies dient zur Gewährleistung einer rationellen Fertigung auch bei hoher Variantenvielfalt. Zum anderen wichtig sind aber auch eine hohe Effizienz der Getriebe sowie eine kompakte Ausführung.

Ferner bekannt ist die Getriebemotoranordnung SEW-Movigear der Fa. SEW Eurodrive. Hierbei handelt es sich um eine einheitliche Anordnung, umfassend ein Getriebe mit einem Elektromotor als Antrieb. Der Elektromotor ist hierbei nicht wie konventionell außen am Getriebe gesondert befestigt, sondern ist in einer eigenen Kammer fest am Getriebe angeflanscht. Das Getriebe und der Antriebsmotor sind unter einem gemeinsamen Abdeckgehäuse angeordnet. Nicht ganz einfach ist hierbei die Kühlung des Antriebsmotors. Es stellt sich das grundsätzliche Problem, dass je kompakter die Anordnung unter dem gemeinsamen Abdeckgehäuse ist, desto schwieriger wird die Kühlung des Antriebsmotors.

Der Erfindung liegt die Aufgabe zu Grunde, diesen Nachteil bei Getriebemotoranordnungen zu vermeiden.

Die erfindungsgemäße Lösung liegt in den Merkmalen des unabhängigen Anspruchs. Vorteilhafte Weiterbildungen sind Gegenstand der abhängigen Ansprüche.

Bei einer Anordnung aus einem (Baukasten-)Getriebe und einem Antriebsmotor, mit einem Gehäuse, das eine Getriebekammer umgibt, in der mindestens eine Getriebestufe angeordnet ist, wobei in der Getriebekammer eine Lagerbohrung für eine Antriebswelle mit einem Antriebsritzel und ferner eine Abtriebswelle mit einem Abtriebszahnrad angeordnet sind, wobei das Antriebsritzel das Abtriebszahnrad antreibt, ist erfindungsgemäß vorgesehen, dass die Getriebestufe und der Antriebsmotor gemeinsam in derselben Getriebekammer angeordnet sind, wobei der Antriebsmotor gemeinsam mit der Getriebestufe gekühlt ist.

Die Erfindung beruht auf dem Gedanken, den Antriebsmotor voll in die Getriebeeinheit zu integrieren. Der Motor ist in derselben Kammer angeordnet wie die eigentliche Getriebestufe und ist so thermisch angebunden. Es ergibt sich damit eine gute Kühlwirkung, ohne auf äußere Luftkühlung angewiesen zu sein. Eine aufwändige Fremdkühlung ist nicht erforderlich. In dem die Kühlung über die eigentliche Getriebestufe mit ihrem Gehäuse bzw. die Kühlung des Getriebes selbst erfolgt, löst die Erfindung erfolgreich den bisher existierenden Widerspruch zwischen Kompaktheit einerseits und ausreichender Kühlung des Antriebsmotors andererseits auf.

Weiter bietet die Erfindung den Vorteil, dass durch die Anordnung des Antriebsmotors in der gemeinsamen Getriebekammer eine Durchführung für die eigentliche Motorwelle von außen nicht mehr erforderlich ist. Das Getriebegehäuse ist also frei von einem Eingang für die Antriebswelle. Eine entsprechende Abdichtung der Antriebswelle ist nicht mehr erforderlich. Die bisher dafür erforderliche verschleißanfällige und reibungsbehaftete Dichtung an der Antriebswelle entfällt. Durch den Entfall dieses Verschleißteils ist die erfindungsgemäße Antriebsanordnung wartungsärmer und langlebiger. Ferner können wirkungsgradgünstige hochdrehende Antriebsmotoren vorgesehen sein, ohne deshalb Nachteile in Bezug auf Dichtungsverschleiß befürchten zu müssen.

Weiter bietet es den Vorteil, dass nunmehr die Antriebsanordnung auch unzugänglich montiert werden kann, sodass ein regelmäßiger Zugang zum Austausch der verschleißträchtigen Dichtung an der Antriebswelle nicht mehr erforderlich ist. Dies verbessert die breite Einsetzbarkeit der erfindungsgemäßen Antriebsanordnung.

Die Anordnung des Antriebsmotors innerhalb der Getriebekammer bietet ferner den Vorteil geringerer Geräuschemissionen. Die eigentliche Getriebekammer wirkt hierbei wie eine Kapselung für den Antriebsmotor. Es wird so eine Geräuschdämmung erreicht, und zwar ohne die für eine Kapselung typischen thermischen Probleme, da erfindungsgemäß der Antriebsmotor seine Abwärme direkt an das Getriebegehäuse abgeben kann und über dieses gekühlt wird. Das gilt insbesondere dann, wenn der Antriebsmotor in der Getriebekammer offen ausgeführt ist.

Zweckmäßigerweise kann der Antriebsmotor ohne Kühlrippen ("kühlfinnenfrei") ausgeführt sein.

Die erfindungsgemäße Anordnung erreicht all diese Vorteile zusammen mit einer verbesserten Kompaktheit. Dies ist im Stand der Technik ohne Beispiel.

Zweckmäßigerweise ist in der Getriebekammer eine Aufnahmebuchse für den Antriebsmotor vorgesehen, die als Kühlkörper für den Antriebsmotor fungiert. Mit Vorteil ist hierbei die Aufnahmebuchse so gestaltet, dass sie eine glattflächige, radiale Schnittstelle zu einem Außenmantel des Antriebsmotors aufweist. Auf diese Weise fungiert die Aufnahmebuchse zum einen zur mechanischen Halterung des Antriebsmotors und zum anderen zur positionsgenauen Lagerung (im Sinne einer Zentrierbuchse), und außerdem sorgt die Aufnahmebuchse somit für eine günstige thermische Übertragung, wobei das Getriebegehäuse als Kühlkörper für den Antriebsmotor fungiert.

Vorzugsweise ist die Aufnahmebuchse in Einsetzrichtung des Antriebsmotors hinterschnittfrei ausgeführt. Dadurch wird erreicht, dass der Antriebsmotor bei der Montage direkt einschiebbar ist. Somit kann die erfindungsgemäße integrierte Anordnung des Antriebsmotors verknüpft werden mit einfacher Montage. Eine rationelle Herstellung wird damit begünstigt.

Vorzugsweise ist eine Energieversorgungsleitung für den Antriebsmotor flüssigkeitsdicht durch das Gehäuse geführt. Die Abdichtung einer Energieversorgungsleitung ist bedeutend einfacher zu bewerkstelligen als die Abdichtung einer rotierenden Antriebswelle wie im Stand der Technik. Die Zuverlässigkeit im Langzeitbetrieb wird damit beträchtlich erhöht.

Vorteilhafterweise ist vorgesehen, dass die Wicklungen des Antriebsmotors flüssigkeitsumspült sind. Es ist zweckmäßig, wenn die Wicklungen dazu mit einer ölfesten Beschichtung versehen sind. Somit kann eine unmittelbare Kühlung des Antriebsmotors, und zwar insbesondere der hochbelasteten Wicklungen, durch das zur Schmierung in der Regel ohnehin vorhandene Getriebeöl erfolgen. Damit ergibt sich eine effiziente Kühlung praktisch ohne Zusatzaufwand.

Mit Vorteil ist eine gemeinsame Flüssigkeitskühlung für die Getriebestufe und den Antriebsmotor vorgesehen, insbesondere eine Spritzölkühlung. Mit einer solchen Spritzölkühlung kann auf einfache Weise eine wirksame Kühlung erreicht werden. Dies ist auch deshalb ein großer Vorteil, da häufig auch Zahnräder oder die zu der Getriebestufe gehörenden Wälzlager mittels Spritzölkühlung gekühlt sind. Um gezielt eine zuverlässige Versorgung des Antriebsmotors mit dem Spritzöl zu erreichen, ist vorzugsweise eine Schleuderscheibe für den Antriebsmotor vorgesehen. Zweckmäßigerweise ist die Spritzölkühlung so ausgeführt, dass ein Luftspalt des Antriebsmotors ölfrei ist. Durch die Freihaltung des Luftspalts werden unnötige Reibungsverluste vermieden, zum anderen werden somit vorteilhafte elektromagnetische Bedingungen an dieser entscheidenden Stelle erreicht.

Bei einer besonders zweckmäßigen Ausführungsform, die ebenfalls unabhängigen Schutz verdient, sind mindestens zwei Lager für den Antriebsmotor vorgesehen, wobei das Antriebsritzel vorzugsweise mit dem Antriebsmotor zwischen den Lagern angeordnet ist. Das bedeutet, dass das Antriebsritzel nicht fliegend angeordnet ist, sondern fest zwischen den Lagern eingespannt ist. Dies bietet beträchtliche Vorteile in Bezug auf Lastverhältnisse sowie Geräuschemissionen.

Zweckmäßigerweise ist der Antriebsmotor als ein Synchronmotor ausgeführt. Die Ausführung als Synchronmotor, insbesondere als permanentmagneterregter Synchronmotor bietet Vorteile eines sehr kompakten Formfaktors sowie einer hohen Effizienz. Beide zusammen in Kombination sind ausgesprochen günstig für eine Integration des Antriebsmotors in die Getriebekammer. Ferner kann auf diese Weise der Antriebsmotor ausgesprochen kurzbauend ausgeführt sein. Unter kurzbauend wird verstanden, dass die Länge des Motors kleiner ist als die Weite (Durchmesser). Zweckmäßigerweise ist der Antriebsmotor kupplungsfrei an die Getriebestufe angekoppelt. Dies ermöglicht eine noch kompaktere Ausführung.

Vorzugsweise ist die Aufnahmebuchse nach außen durch ein abnehmbares Lagerschild abgeschlossen. Somit kann bei abgenommenem Lagerschild die Montage des Antriebsmotors auf einfache Weise durch Einschieben in die Aufnahmebuchse erfolgen. Nach Montage kann die Montageöffnung mit dem Lagerschild leicht und zuverlässig verschlossen werden. Zweckmäßigerweise ist das Lagerschild auswechselbar ausgeführt, und zwar vorzugsweise modular mit verschieden großen Einbautiefen. Damit kann auf einfache Weise eine Anpassung an verschieden große, insbesondere verschieden tief bauende Antriebsmotoren erreicht sein. Mit Vorteil ist an dem Lagerschild ein Hilfsabtrieb angeordnet.

Diese können insbesondere für Encoder, Bremse, Zusatzlüfter oder andere Funktionen vorgesehen sein. Durch modulare Ausführung des Lagerschildes kann somit eine einfache Anpassung an unterschiedliche Ausrüstungen mit verschiedenen Hilfsabtrieben erreicht werden, und zwar sowohl im Hinblick auf die Funktion des Hilfsabtriebs wie auch im Hinblick auf dessen Anordnung.

Mit besonderem Vorteil bilden der Antriebsmotor und das Lagerschild eine vormontierte Einheit. Auf diese Weise kann ein hoher Grad an Vormontage erreicht werden, sodass die eigentliche Montage deutlich vereinfacht ist.

Zweckmäßigerweise ist der Antriebsmotor finnenfrei ausgeführt. Damit ergibt sich eine verbesserte Wärmeübertragung auf das Getriebegehäuse über die Aufnahmebuchse.

Die Getriebstufe ist zweckmäßigerweise als Stirnradgetriebe ausgebildet. Dies ergibt eine besonders kompakte Bauform. Ferner sind Antriebswelle und Abtriebswelle vorzugsweise parallel und versetzt (nicht-koaxial) zueinander angeordnet.

Die Abtriebswelle ist vorzugsweise als Durchsteckwelle ausgeführt. Damit ist ein verbreitertes Anwendungsspektrum eröffnet.

Die Erfindung wird nachfolgend beispielhaft unter Bezugnahme auf die Zeichnung anhand eines Ausführungsbeispiels näher erläutert. Es zeigen:

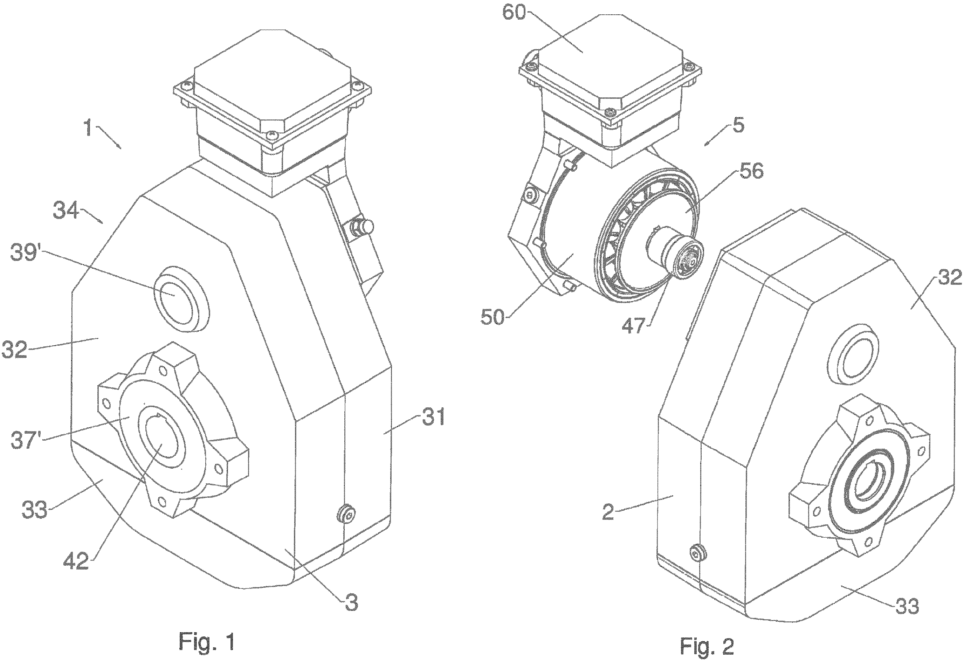

- Fig. 1: eine Aufsicht auf ein Ausführungsbeispiel mit montiertem Antriebsmotor;
- Fig. 2: eine Explosionsansicht des Ausführungsbeispiel mit abgesetztem Antriebsmotor;

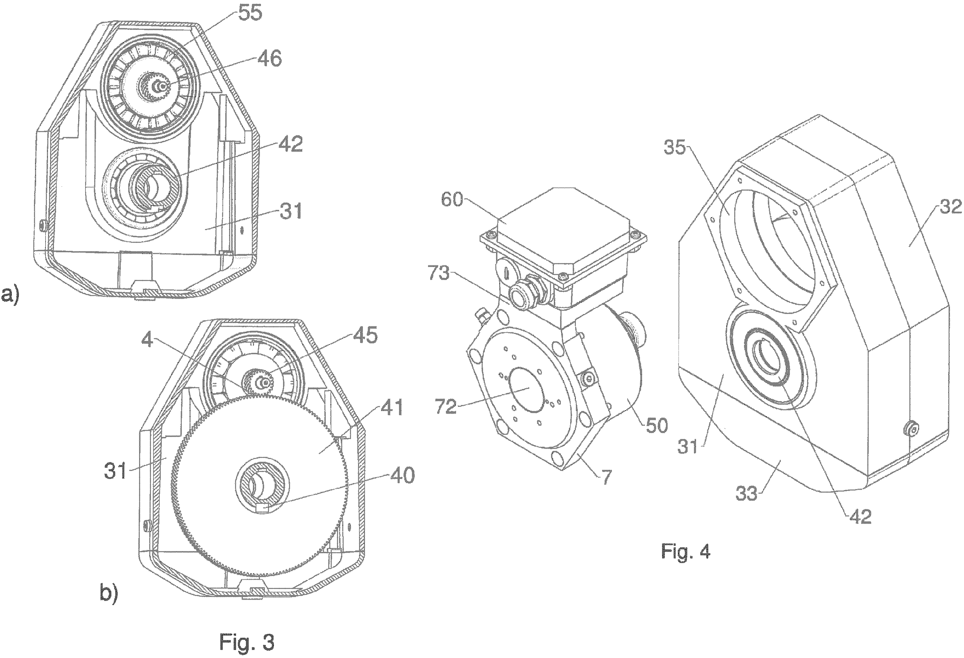

- Fig. 3a, b: Schnittansichten eines Getriebegehäuses ohne und mit montierter Getriebestufe;
- Fig. 4: eine Rückansicht mit montagebereitem Antriebsmotor; und

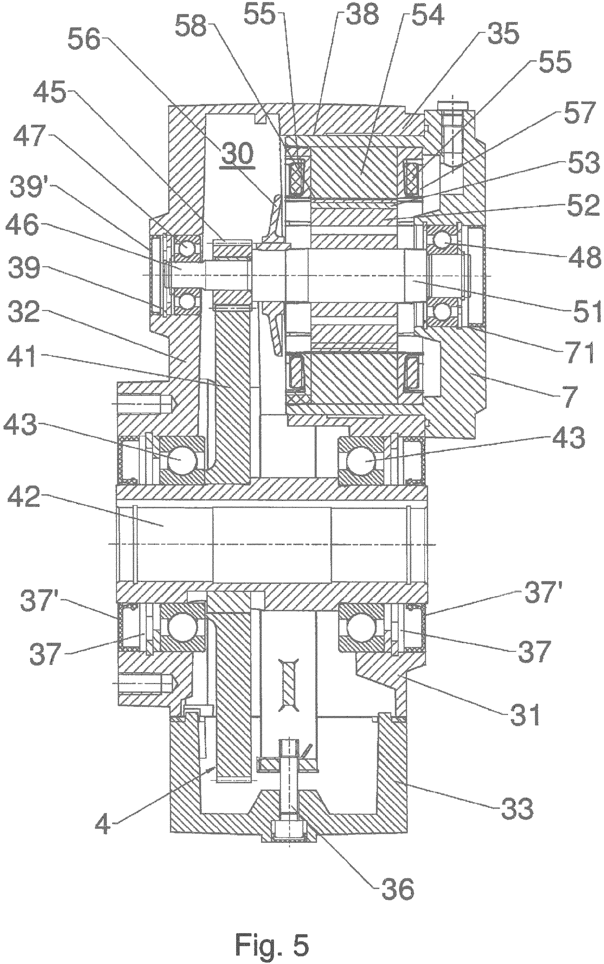

- Fig. 5: eine Querschnittsansicht im montierten Zustand.

Ein in seiner Gesamtheit mit der Bezugsziffer 1 bezeichnetes Ausführungsbeispiel für eine erfindungsgemäße Anordnung umfasst ein Getriebe 2 sowie einen Antriebsmotor 5. Das Getriebe 2 umfasst ein Gehäuse 3, welches in seinem Innenraum eine Getriebekammer 30 umschließt. In der Getriebekammer 30 ist eine Getriebestufe 4 angeordnet.

Das Gehäuse 3 ist mehrteilig ausgeführt. Es umfasst einen Getriebehauptkörper 34 und einen Getriebefuß 33. Der Getriebehauptkörper 34 weist eine rückwärtige Gehäusewand 31 und eine vordere Gehäusewand 32 auf. An einem unteren Ende des Getriebehauptkörpers 34 ist der Getriebefuß 33 über eine Schraubbefestigung 36 lösbar befestigt. Der Getriebefuß 33 fungiert ferner als Sumpf für Getriebeöl (nicht dargestellt), welches für eine Schmierung sowie Kühlung der Getriebestufe 4 und auch des Antriebsmotors 5 sorgt.

In der vorderen und rückwärtigen Gehäusewand 31, 32 ist je eine Lagerbohrung 37 für eine Abtriebswelle 42 der Getriebestufe 4 angeordnet, wobei die beiden Lagerbohrungen 37 miteinander fluchten. In den Lagerbohrungen 37 ist jeweils ein als Wälzlager ausgeführtes Hauptlager 43 für die Abtriebswelle 42 angeordnet. Die Hauptlager 43 sind durch Dichtringe 37' nach außen abgedeckt. Die Abtriebswelle 42 ist mit einem inneren Hohlraum versehen und als Durchgangswelle ausgeführt.

Drehfest auf der Abtriebswelle 42 ist ein Abtriebszahnrad 41 mittels einer Nut und Federverbindung 40 angeordnet. Das Abtriebszahnrad 41 kämmt mit einem Antriebsritzel 45, welches auf einer Antriebswelle 46 angeordnet ist. Die Antriebswelle 46 ist an ihrem vorderen Ende mittels eines Wälzlagers 47 in einer in der vorderen Gehäusewand 32 angeordneten Antriebslagerbohrung 39 gelagert und mit einem Lagerdeckel 39' abgedeckt.

Fluchtend mit der Antriebslagerbohrung 39 ist in der rückwärtigen Gehäusewand 31 eine Aufnahmebuchse 35 für den Antriebsmotor 5 vorgesehen. Die Aufnahmebuchse 35 ist im Wesentlichen zylindrisch geformt und weist an ihrer Innenwandung eine oder mehrere glattflächige radiale Schnittstellen 38 auf. Diese sind ausgebildet zur flächigen Anlage an einen Außenmantel 50 des Antriebsmotors 5. Durch die flächige Anlage wird zum einen eine positionsgenaue und sichere Halterung des Antriebsmotors 5 in dem Getriebehauptkörper 34 erreicht und zum anderen wird eine gute Wärmeübertragung von dem Antriebsmotor 5 in das Getriebegehäuse 3 gewährleistet. Auf diese Weise fungieren die Aufnahmebuchse 35 und das Getriebegehäuse 3 in seiner Gesamtheit als Kühlkörper für den Antriebsmotor 5.

Der Antriebsmotor 5 ist als permanentmagneterregter Synchronmotor ausgeführt. Er umfasst einen Rotor 52 mit Permanentmagneten 53, die auf einer Rotorwelle 51 angeordnet sind. Ferner umfasst der Antriebsmotor 5 einen Stator 54 mit einer Mehrzahl von Wicklungen 55, die innenseitig an dem Außenmantel 50 angeordnet sind. Die Wicklungen 55 sind angesteuert von einer Motorelektronik, die in einem außen angeordneten Schaltkasten 60 angeordnet ist. Durch die an sich bekannte Ansteuerung der Wicklungen 55 mittels der Motorelektronik wird die mit Permanentmagneten 53 versehene Rotorwelle 51 in Drehung versetzt.

An der Vorderseite der Rotorwelle 51 ist die Antriebswelle 46 mit dem Antriebsritzel 45 angeordnet. Zweckmäßigerweise ist bei der dargestellten Ausführungsform die Antriebswelle 46 einteilig mit der Rotorwelle 51 ausgeführt. Auf der Rotorwelle 51 sitzt zwischen dem Antriebsritzel 45 und den Statorwicklungen 55 eine Schleuderscheibe 56. Sie dient dazu, während des Betriebs eine Kühlung des Antriebsmotors 5 und insbesondere seiner Wicklungen 55 durch abgeschleudertes Öl zu erreichen (Spritzölkühlung).

An dem rückwärtigen Ende der Rotorwelle 51 ist ein Motorlager 48 vorgesehen. Dieses ist in einer Lagerbohrung 71 eines Lagerschilds 7 angeordnet, das an der Rückseite des Antriebsmotors 5 vorgesehen ist und mit dem Außenmantel 50 (vorzugsweise einstückig) verbunden ist. Auf diese Weise ist der Antriebsmotor 5 mit seinem Antriebsritzel 45 fest eingespannt zwischen den beiden Lagern 47 und 48. Damit ergibt sich ein vibrationsarmer Lauf des Antriebsmotors 5, was günstig ist für eine niedrige Geräuschentwicklung.

Die Wicklungen 55 sind mit einer ölfesten Beschichtung 57 versehen. Sie können auf diese Weise mit Öl als Kühlflüssigkeit umspült und so optimal gekühlt werden. Damit ist eine gute Abführung von Verlustwärme nicht nur über die Schnittstelle 38 in das Getriebegehäuse 3, sondern auch über das mittels der Schleuderscheibe 56 zugeführte Spritzöl gewährleistet.

Die Schleuderscheibe 56 weißt vorzugsweise einen größeren Durchmesser auf als der Rotor 52 des Antriebsmotors 5. Auf diese Weise wird erreicht, dass ein zwischen Rotor 52 und Stator 54 gebildeter Luftspalt 58 weitgehend frei bleibt von Öleintrag.

Das Lagerschild 7 ist abnehmbar ausgeführt. Vorzugsweise bildet es mit dem Außenmantel 50, dem Antriebsmotor 5 sowie dem aufgestockten Antriebsritzel 45 und dem vorne auf der Antriebswelle 46 aufgebrachten Lager 47 eine vormontierte Einheit. Diese kann auf einfache Weise durch Einschieben von hinten in die Aufnahmebuchse 35 rationell montiert werden.

An dem Lagerschild 7 ist eine Aufnahme 73 für den Schaltkasten 60 vorgesehen. Vorzugsweise ist eine Montage des Schaltkastens 60 an dem Lagerschild 7 in verschiedenen Winkelstellungen ermöglicht, sodass der Schaltkasten 60 in verschiedene Richtungen weisen kann. Damit kann eine gute Anpassung auch an beengte Einbauverhältnisse erreicht werden. An der Rückseite des Lagerschilds 7 kann ferner optional ein Hilfsabtrieb 72 vorgesehen sein. Dieser ist mit der Rückseite der Rotorwelle 51 verbunden und ermöglicht so einen Antrieb von Hilfskomponenten, wie beispielsweise einem Encoder, einer Bremse oder einem Zusatzlüfter (nicht dargestellt).

## Patentansprüche

1. Anordnung aus einem Getriebe (2) und einem Antriebsmotor (5) mit einem Gehäuse (3), das eine Getriebekammer (30) umgibt, in der mindestens eine Getriebestufe (4) angeordnet ist, wobei in der Getriebekammer (30) eine Lagerbohrung (39) für eine Antriebswelle (46) mit einem Antriebsritzel (45) und ferner eine Abtriebswelle (42) mit einem Abtriebszahnrad (41) angeordnet sind, wobei das Antriebsritzel (45) das Abtriebszahnrad (41) antreibt,
**dadurch gekennzeichnet, dass**
die Getriebestufe (4) und der Antriebsmotor (5) gemeinsam in derselben Getriebekammer (30) angeordnet sind, wobei der Antriebsmotor (5) gemeinsam mit der Getriebestufe (4) gekühlt ist.

2. Anordnung nach Anspruch 1, **dadurch gekennzeichnet, dass** in der Getriebekammer (30) eine Aufnahmebuchse (35) für den Antriebsmotor (5) vorgesehen ist, die als Kühlkörper für den Antriebsmotor (5) fungiert, wobei die Aufnahmebuchse (35) eine glattflächige radiale Schnittstelle (38) zu einem Außenmantel (50) des Antriebsmotors (5) aufweist.

3. Anordnung nach Anspruch 2, **dadurch gekennzeichnet, dass** die Aufnahmebuchse (35) in Einsetzrichtung des Antriebsmotors (5) hinterschnittfrei ist, wobei der Antriebsmotor (5) vorzugsweise direkt einschiebbar ist.

4. Anordnung nach einem der vorangehenden Ansprüche, **dadurch gekennzeichnet, dass** der Antriebsmotor kühlfinnenfrei ausgeführt ist.

5. Anordnung nach einem der vorangehenden Ansprüche, **dadurch gekennzeichnet, dass** Wicklungen (55) des Antriebsmotors (5) flüssigkeitsumspült sind, insbesondere mit einer ölfesten Beschichtung (57) versehen sind.

6. Anordnung nach einem der vorangehenden Ansprüche, **dadurch gekennzeichnet, dass** eine gemeinsame Flüssigkeitskühlung für die Getriebestufe (4) und den Antriebsmotor (5) vorgesehen ist, insbesondere eine Spritzölkühlung.

7. Anordnung nach Anspruch 6, **dadurch gekennzeichnet, dass** eine Schleuderscheibe (56) zur Spritzölkühlung des Antriebsmotors (5) vorgesehen ist.

8. Anordnung nach Anspruch 6 oder 7, **dadurch gekennzeichnet, dass** die Spritzölkühlung so ausgeführt ist, dass ein Luftspalt (58) des Antriebsmotors (5) ölfrei ist.

9. Anordnung nach einem der vorangehenden Ansprüche, **dadurch gekennzeichnet, dass** mindestens zwei Lager (47, 48) für den Antriebsmotor (5) vorgesehen sind, wobei das Antriebsritzel (45) zwischen den Lagern (47, 48) angeordnet ist.

10. Anordnung nach einem der vorangehenden Ansprüche, **dadurch gekennzeichnet, dass** der Antriebsmotor (5) ein Synchronmotor ist.

11. Anordnung nach einem der vorangehenden Ansprüche, **dadurch gekennzeichnet, dass** der Antriebsmotor (5) kupplungsfrei an die Getriebestufe (4) angekoppelt ist.

12. Anordnung nach einem der vorangehenden Ansprüche, **dadurch gekennzeichnet, dass** die Aufnahmebuchse (35) nach außen durch ein abnehmbares Lagerschild (7) abgeschlossen ist.

13. Anordnung nach Anspruch 11, **dadurch gekennzeichnet, dass** das Lagerschild (7) auswechselbar ist, vorzugsweise modular mit verschieden großer Einbautiefe.

14. Anordnung nach Anspruch 12 oder 13, **dadurch gekennzeichnet, dass** am Lagerschild (7) ein Hilfsabtrieb (72) angeordnet ist, insbesondere für Encoder, Bremse oder Zusatzlüfter.

15. Anordnung nach einem der Ansprüche 12 bis 14, **dadurch gekennzeichnet, dass** der Antriebsmotor (5) und das Lagerschild (7) eine vormontierte Einheit sind.

16. Anordnung nach einem der vorangehenden Ansprüche, **dadurch gekennzeichnet, dass** der Antriebsmotor (5) kurzbauend ist mit einer Länge die kleiner ist als die Weite.

17. Anordnung nach einem der vorangehenden Ansprüche, **dadurch gekennzeichnet, dass** die Antriebswelle (46) nur innerhalb des Gehäuses (3) angeordnet ist, insbesondere dichtungsfrei ist, wobei die Getriebestufe (4) vorzugsweise als Stirnradgetriebestufe ausgeführt ist.
